# EUROPEAN PATENT SPECIFICATION

(11) **EP 3 583 820 B1**
(45) Date of publication and mention of the grant of the patent: **23.09.2026**
(21) Application number: 17896333.6
(22) Date of filing: 17.02.2017
(51) Int. Cl.: H04W 74/0833, H04W 74/08, H04B 7/06, H04W 72/044

(54) **CONTENTION BASED COMMUNICATION**
KONFLIKTBASIERTE KOMMUNIKATION
COMMUNICATION BASÉE SUR LA CONTENTION

(43) Date of publication of application: 25.12.2019
(73) Proprietor: Nokia Technologies Oy, 02610 Espoo (FI)
(72) Inventor: THOMAS, Timothy, Au Train, MI 49806 (US); VOOK, Frederick, Schaumburg, IL 60194 (US)
(74) Representative: Mudge, Kevin
(86) International application number: PCT/FI2017/050107
(87) International publication number: WO 2018/150079

(56) References cited:
- WO-A1-2012/082053
- WO-A1-2016/128095
- WO-A1-2016/128095
- US-A1- 2014 016 573
- US-A1- 2016 119 038
- US-A1- 2016 119 038
- US-A1- 2016 192 398
- US-A1- 2016 192 401

## Description

### FIELD

The present invention relates to communicating information using a contention-based channel.

### BACKGROUND

Wireless communication may proceed based on dedicated or shared channels. When using shared channels, the possibility of collision between transmissions from two senders may arise. WO2016/128095 relates to cellular communications and discloses a mechanism for the translation of basis functions for feedback in a wireless network, whereby a base station transmits to a mobile station, sounding signals via a first set of basis function beams, and receiving, by the base station from the mobile station in response to the transmitting, feedback signals indicating a translated basis-function weighting for one or more basis function beams of the second set of basis function beams, the translated basis-function weighting for one or more basis function beams being based on the first set of basis function beams, wherein the second set of basis function beams is different than the first set of basis function beams.

Random access channels may be used to access a cellular communication system, for example, to request a dedicated channel to be arranged for a user equipment requesting the access. Random access channels may be arranged based on a set of timeslots and/or orthogonal preambles, to reduce the probability of collisions occurring.

Beamforming may be used to enhance transmission and/or reception in a directional manner. For example, where a base station of a cellular communication system is able to determine approximate locations or directions of a limited number of user equipments in a cell controlled by the base station, an antenna array of the base station may be configured, using weight vectors, to optimize communication with directions, where each of the limited number of user equipments presently are located.

Since beamforming may enhance reception sensitivity, user equipments may be enabled to transmit at a lower transmit power, which conserves their battery resources. On the other hand, as transmission is directional, the base station itself may transmit at a lower transmit power, which reduces the level of interference in the cell controlled by the base station in question.

Millimetre wave, mmWave, wireless communication, also known as extremely high frequency, EHF, involves communicating with electromagnetic waves that have wavelengths from ten to one millimetres, for example. The corresponding frequencies range from 30 to 300 gigahertz. EHF radio waves exhibit attenuation when propagating in atmospheric circumstances, making communication using these waves in this regard more challenging than lower frequencies. Communication ranges obtainable with reasonable transmit powers may span up to one kilometre, for example, depending on various factors. Further, humidity and rain increase attenuation of EHF radio waves. On the other hand, wide bandwidths may be available around EHF frequencies.

### SUMMARY OF THE INVENTION

The invention is defined by the features of the independent claims. Some specific embodiments are defined in the dependent claims.

The present invention comprises at least one feature from the following bulleted list:
- the apparatus is further configured to identify, from reception data, the set of beamforming beams, the set of beamforming beams being transmitted by a base station
- the apparatus is configured to determine the multipliers from pilot signals received over the respective beamforming beams
- the beamforming beams are near-omni-directional
- a near-omni-directional beamforming beam varies in amplitude by less than 12 dB over a span of 160 degrees
- the beamforming beams are basis function beams
- each multiplier comprises a phase with amplitude unity
- the apparatus is further configured to multiply the random access preamble with the respective element from the cover sequence
- the transmitter is configured to transmit the block using a millimetre wave band
- the data comprises at least one of the following: an identifier of the apparatus, and identifier of a subscription associated with the apparatus and feedback information to assist in beamforming communication toward the apparatus.

The present invention comprises at least one feature from the following bulleted list:
- manipulating in accordance with respective elements from the cover sequence comprises multiplying or dividing a repetition of the data with an element from the cover sequence that corresponds to the beam over which this repetition of the data was received
- the apparatus is configured to transmit pilot signals over the beamforming beams comprised in the set
- the apparatus is configured to transmit pilot signals over second beamforming beams, the pilot signals relating to the beamforming beams in the set of beamforming beams, the second beamforming beams not being comprised in the set
- the beamforming beams are near-omni-directional a near-omni-directional beamforming beam varies in amplitude by less than 12 dB over a span of 160 degrees
- the beamforming beams are basis function beams
- the beamforming beams are millimetre wave band beams
- the block is received over two or more radio frequency arrays
- the apparatus is configured to access a mapping that associates a set of random access preambles with a set of cover sequences
- the mapping is a one-to-one mapping which associates each preamble with one and only one cover sequence.

### BRIEF DESCRIPTION OF THE DRAWINGS

FIGURE 1 illustrates an example system in accordance with at least some embodiments of the present invention;
FIGURE 2 illustrates a single baseband path for Q antenna elements;
FIGURE 3 illustrates a case with B baseband paths for Q antenna elements;
FIGURE 4 illustrates radiation patterns of beamforming beams;
FIGURE 5 illustrates signalling in accordance with at least some embodiments of the present invention;
FIGURE 6 illustrates an example apparatus capable of supporting at least some embodiments of the present invention;
FIGURE 7 is a flow graph of a method in accordance with at least some embodiments of the present invention, and
FIGURE 8 is a flow graph of a method in accordance with at least some embodiments of the present invention.

### EMBODIMENTS

A block comprising a random access preamble and data is repeated during a receive interval of a base station, such that the block is transmitted once for each of a set of beams capable of connecting a user equipment with the base station. The data may comprise data that is in the block in addition to the random access preamble. The data may comprise control data, for example. Each repetition of the block is multiplied, or phased, with a phase of the respective beam, and further the data portion of the block may be multiplied with an element from a cover sequence, the cover sequence being selected based on the random access preamble. In other words, the data portion is multiplied with a different element from the cover sequence for each repetition of the block. Thus in a multiuser case the users may be separated from each other and the data portions may be more easily detected, since the cover sequence is different for each random access preamble. The likelihood that two users select the same cover sequence is low.

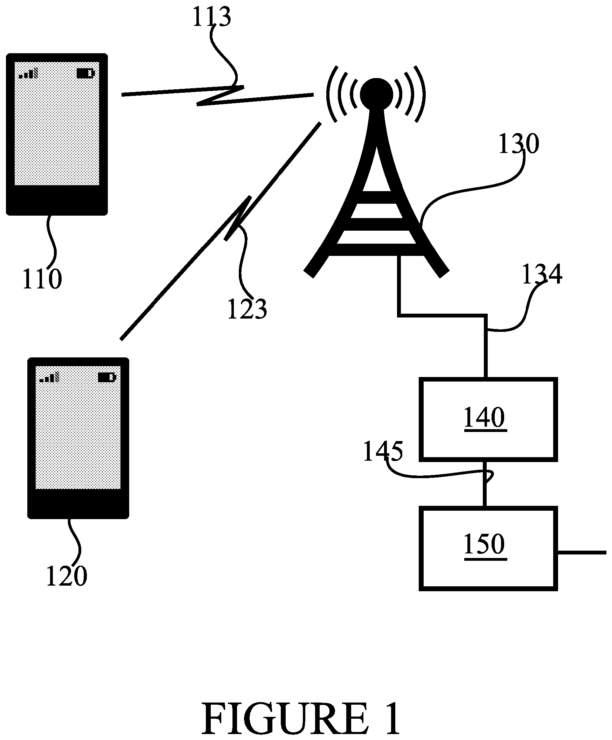

FIGURE 1 illustrates an example system in accordance with at least some embodiments of the present invention. The system includes user equipments 110 and 120. User equipment 110 is in communication with base station 130 via wireless link 113. User equipment 120 is in communication with base station 130 via wireless link 123. Wireless links 113, 123 may comprise uplinks for conveying information toward base station 130, and downlinks for conveying information from base station 130 toward a user equipment.

Base station 130 may be configured to operate in accordance with a cellular or non-cellular standard, for example. Examples of cellular standards include wideband code division multiple access, WCDMA, long tern evolution, LTE, IS-95 and fifth generation, 5G. 5G may be referred to as New Radio, NR, in the 3^{rd} Generation Partnership Project, 3GPP. Examples of non-cellular technologies include wireless local area network, WLAN, and worldwide interoperability for microwave access, WiMAX. The wireless links 113, 123 may be arranged in accordance with a same communication standard as base station 130, to thereby obtain interoperability. "Base station" is a terminological choice only, in certain systems the expression "access point" may be used for a device with similar function.

Base station 130 is coupled with core network node 140 via connection 134. Connection 134 may comprise a wire-line connection, such as, for example, a fibre-optic connection. Core network node 140 may be tasked with network-wide functions such as maintenance of subscriber registers, switching and access control, for example. Core network node 140 may be connected with gateway 150, via connection 145, to obtain connectivity with further networks, for example.

User equipments may initiate communications toward base station 130 using a channel dedicated to the user equipment, or a contention-based channel, such as a random access channel, for example. A random access channel may be shared between user equipments in the sense that plural user equipments are authorized to transmit on the channel. In various systems, a collision between two user equipments using this channel is made less likely by use of random access preambles, which may be orthogonal to each other or have very low cross-correlation between each other. Since the preambles are orthogonal or have a very low cross-correlation, base station 130 may be able to detect both transmissions despite the transmissions taking place at the same time, over the same frequency resources. A collision occurs when two user equipments transmit on the random access channel at the same time using the same resources, such that the transmissions interfere with each other.

Beamforming may be performed with antenna arrays, such that reception and/or transmission is done with weight vectors, which cause the antenna array to assume a directional aspect to enhance reception and/or transmission in a certain direction. Beamforming may also be done, with weight vectors, to obtain beams that are wide and less direction-selective than specifically direction-selective beams.

A difficulty with array processing at millimeter wave, mmWave, communication is that the analog to digital, AD, converters and digital to analog, DA, converters consume a lot of power because of the large bandwidths of mmWave systems. For example, bandwidths may reach 1-2 GHz as opposed to 20 MHz for traditional cellular frequencies. The large power consumption of the DA and AD converters means that the number of AD and DA converters needs to be minimized in mmWave and hence the consequence is that traditional array processing at baseband is no longer as attractive as in traditional systems. Traditional baseband processing means that there is a full transceiver chain behind each antenna. The baseband beamforming can be wideband or with frequency-selective weights applied at baseband in the frequency domain. At traditional cellular frequencies the number of antennas/baseband transceivers is typically less than or equal to 8, but at mmWave a larger number of antennas may be used, for example reaching or exceeding 16, to overcome increased path loss at the higher frequencies. Even if full baseband units were practical at the large bandwidths of mmWave systems, there might still be issues in receiving random access preambles sent by any user in the serving area from all Rx antennas in an omni-directional manner. Some of these issues are how to overcome the loss of not using beamforming and how to aggregate all antennas into a truly omni-directional signal. Compounding the problem is that some control data may be desired to be sent with the random access preamble, where this control data could contain information further identifying the mobile and/or feedback to assist the base station in pointing its RF beams. For example, the data may comprise at least one of the following: an identifier of the apparatus, and identifier of a subscription associated with the apparatus and feedback information to assist in beamforming communication toward the apparatus. The uplink random access channel cannot be received with directional weights as the base station does not know a random access transmission is being sent from a particular mobile.

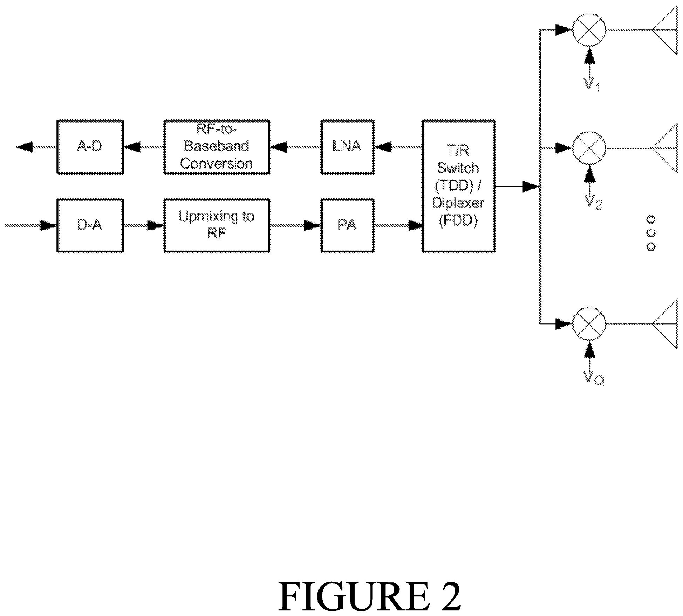

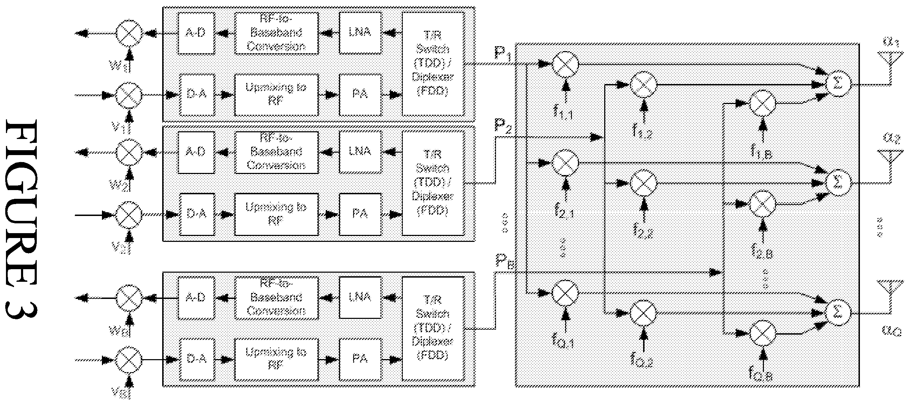

An alternative to there being a baseband unit present behind each antenna element is for there to be a single or a small number of baseband paths that are available for beamforming such as in an RF beamforming array. However, using these array architectures means that only a single or a few RF beams can be activated at a given time. Compounding the problem is that the base station will not know where to point its receive beams, since users sending the random access will not yet be registered into the system or will be inactive up to that point. Hence while it would be best to receive the random access preamble plus random access control data from highly-directional RF beams tailored to the mobile transmitting the preamble plus control data, the base station will likely be unaware of where to point the RF beam since it will not know which user is transmitting the random access preamble and control data at a particular time. FIGURE 2 illustrates a single baseband path for Q antenna elements, and FIGURE 3 illustrates a case with B baseband paths for Q antenna elements.

Further, there may be two arrays per sector in a base station, where the arrays employ orthogonal polarizations relative to each other. Since it is desirable to receive the random access preambles and control data in an omni-directional manner, a method for omni-directional reception of random access preambles plus data across two arrays with orthogonal polarizations is desired while retaining a large gain to all users sending a random access preamble plus control data to overcome the increased path loss expected at mmWave. Arrays may be referred to as radio frequency arrays, for example.

In principle, two types of basis function beams are considered. The first are highly-directional beams where it is likely that the user equipment would only see a few dominant basis function beams. In this case, the number of beams in a set used by the user equipment, *M_{B},* is small. The second option is using near-omni-directional basis function beams where the user equipment will likely see each beam, or almost each beam, as being equally good. For a two dimensional array with *M* antennas in each dimension, such as azimuth and elevation, highly-directional basis function beams are first chosen for each dimension, and then the set of overall basis function beams is formed as the Kronecker combination of the basis function beams for the azimuth and elevation dimensions. For example the basis function beams in one dimension such as azimuth and elevation, can be chosen from a sampling of the DFT matrix V whose (*n,m*)^{th} element is given by:
${V}_{nm} \left(M\right) = exp \left\{-j\frac{2 π}{M}\left(n-1\right)\left(m-1\right)\right\}$
where 1≤*n*≤*M* and 1≤*m*≤*M.* Referring back to FIGURE 2 with *Q* in the figure equal to *M²,* the transmit weights *v*₁ through *V_{Q}* for one of the basis function beams would then be the Kronecker product of two of the columns of V (one column for elevation and one column for azimuth). In equation form let **z***ₙ* refer to column *n* of V:
${z}_{n} = \left[\begin{matrix}{V}_{1 n} \\ ⋮ \\ {V}_{Mn}\end{matrix}\right]$
then the set of *M*² highly-directional basis function beams or transmit weight vectors, where each weight vector is *M*²x1, is defined by (1≤*n*≤*M* and 1≤*m*≤*M*):
${v}_{n + M \left(m-1\right)} = \left[\begin{matrix}{V}_{1 m} {z}_{n} \\ {V}_{2 m} {z}_{n} \\ ⋮ \\ {V}_{Mm} {z}_{n}\end{matrix}\right] .$

When used at the receiver of a base station, the highly-directional beams will listen to specific directions. When using one of these basis function beams to listen to a signal from a mobile, it will favor certain directions over others by a wide range, for example more than a 30 dB difference between the maximum and minimum directions. Employing highly-directional basis function beams when receiving the random access preambles and random access control data will have certain disadvantages over near-omni-directional basis functions. In detail, using highly-directional basis function beams means that only a few beams will be dominant at the user equipment (e.g., *M_{B}*«*M*²*,* perhaps as low as 2 or 3). Hence when the base station adds up the signals on the different random access preambles and different random access control data portions, most will only contain noise and hence the noise will be enhanced.

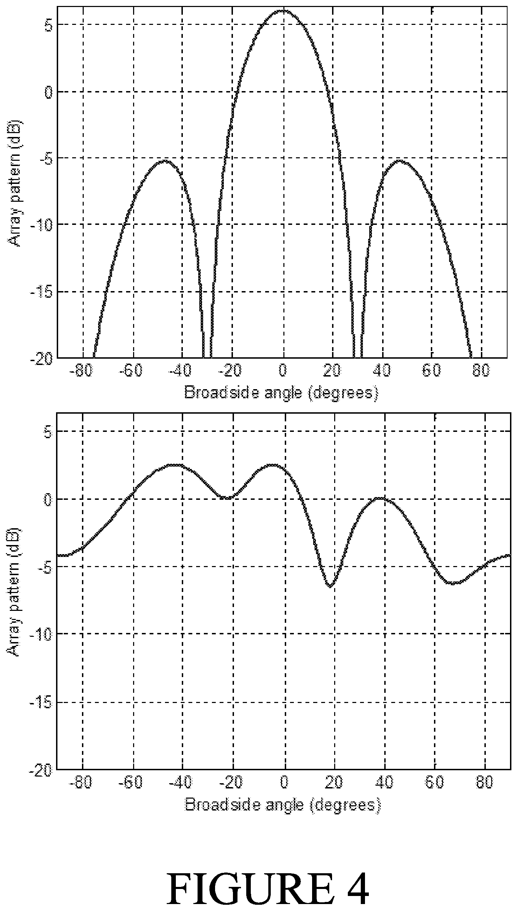

To overcome the disadvantages of using highly-directional basis function beams, near-omni-directional basis function beams can be constructed. To construct the near-omni-directional basis function beams, first a near-omni-directional beam is created for one dimension, either azimuth or elevation. The construction can be done in any known way, such as, for example, by a gradient search which minimizes the peaks while maximizing the minimums of the antenna pattern while forcing the elements of the weight vector to be constant modulus. The constant modulus property may be seen as useful in RF beamforming, so that full energy is received on all receive antennas instead of attenuated power on some receive antennas which will result in a degradation of the SNR after receive combining at RF. FIGURE 4 illustrates radiation patterns of beamforming beams. In the upper half of the figure, a directional beamforming beam is illustrated, where a clear peak is visible in the defined preferred direction, corresponding to broadside angle zero degrees. In the lower half of the Figure, a near-omni-directional beam pattern is illustrated, where no single direction significantly dominates over others.

When seeking to transmit a random access preamble and some data, such as, for example, control data, to the network, a user equipment may initially determine a set of beamforming beams, such as, for example, basis function beams, to use that it can receive from the base station. For example, the user equipment can determine the set of beams, over which it can receive pilot symbols at an amplitude that exceeds a threshold. Pilot symbols may be referred to as training data. Data from a receiver of the user equipment that comprises the received pilot symbols may be referred to as reception data, for example.

From the pilots, the user equipment may determine, for each beam in the set, a phase. In other words, the number of beams in the set may be equal to the number of determined phases, each phase being associated with exactly one beam.

The user equipment may then select a random access preamble to use. This selection may be random or it may be based on parameters, for example. A cover sequence is also selected by the user equipment, such that the selected cover sequence and random access preamble are associated with a mapping. Therefore, the user equipment may select a random access preamble and then, based on the selected random access preamble, select a cover sequence. Alternatively, the user equipment may first select a cover sequence, and then, based on the selected cover sequence, select a random access preamble. As a specific example, if random access preamble 3 is selected, cover sequence 3 may likewise be selected. The cover sequences may comprise Walsh-Hadamard sequences, for example.

Based on, for example, the training data, the user equipment will know when the base station listens on each of the beams in the set of beams determined in the user equipment.

The user equipment may then proceed to transmit to the base station a block comprising the random access preamble and the data. The block may be transmitted a number of times that is equal to the number of beams in the set of beams. Each transmission of the block may be timed to occur at a time when the base station is listening on the respective beam, such that for that transmission, the block is rotated by the determined phase of the beam that is listening. In addition to rotating the entire block with the phase, the data portion of the block is, for each transmission, multiplied with an element from the cover sequence that corresponds to the beam that is listening. In other words, the entire block is manipulated with the phase of the beam into which the transmission is performed, and further, the data portion of the block is manipulated with the element of the cover sequence that corresponds to the beam into which the transmission is performed.

The base station may receive signals over the beams, where the beams may include also beams the user equipment did not use in transmitting the block, that is, beams not comprised in the set. Thus, an aggregated signal, known also as an aggregation, may be generated as a result of summing the received signals together. The random access preamble may be detected from the aggregated signal, and responsive to detection of the random access preamble, the base station determines which cover sequence was used by the user equipment, since the cover sequences and random access preambles are associated with each other via the mapping. This is beneficial, as preamble detection may be run from one signal only, rather than for each received beam. The preamble may be detected, for example, by correlating the aggregated signal with all possible random access preambles. The base station uses the cover sequence to recover the data portion of the block. A benefit is obtained from using the cover sequence, in that each user is orthogonal after the summing of the weighted data portions in the base station. Reception of the random access preambles and data across two or more RF arrays in at least two sectors at a base station may be performed, as well as coordinating beam reception across the two or more RF arrays.

While described above in terms of using a phase to rotate the block prior to transmission, more generally the manipulation in question may involve a phase rotation and a gain. However, as the user equipment may wish to transmit the random access preamble at maximum transmit power when using mmWave, employing a gain here would result in some lost power, wherefore a phase-only manipulation is preferable. In general, manipulating with phase and gain may comprise multiplying with a complex-valued multiplier. The manipulation of the block accomplishes a weighting of the modulated electromagnetic signal that is transmitted from the user equipment. Such weighting may comprise a phase change only, or a combination of phase and amplitude change. Thus, physical properties of the transmitted electromagnetic signal are modified, to obtain a modified electromagnetic signal.

Where the base station beams are omni-directional, the user equipment will be enabled to use a larger portion of them to convey the block to the base station, compared to the case where direction-sensitive narrow beams are used. Therefore, omni-directional beams will result in the benefit that less noise is present in the aggregated signal. The beams may be considered to be omni-directional, for example, where transmission amplitude, or reception sensitivity, varies by less than 8, 10, 12 or 14 decibels over a span of 160 degrees, for example.

For example assume we have a 4x4 array (i.e., M=4), the aggregated random access preamble signal at the base station is given by
$y \left(n\right) = {\sum }_{u = 1}^{{N}_{u}} {\sum }_{t = 1}^{16} \left[{α}_{t}^{u}{v}_{t}^{T}{h}_{u}{x}_{u}\left(n\right)+{n}_{t}\left(n\right)\right] ,$
where *Nᵤ* is the number of mobiles sending random access preambles at the same time, ${α}_{t}^{u}$ is the phase value for basis function beam *t* for mobile *u,* **v***ₜ* is the *M*²x1 basis function beam used during random access interval *t*, **h***ᵤ* is the *M*²x1 channel from mobile *u, xᵤ*(*n*) is the random access preamble from mobile *u,* and *n*ₜ*(n)* is additive noise with power of σ². The random access preambles from the different users could be different spreading codes or different sequences (such as generalized chirp-like, GCL, sequences) that have good auto correlations and good cross correlations.

The goal is to create an aggregated random access signal which has a similar SNR to a signal received on an optimal receive beam, which, for a single-ray channel, is given by
${SNR}_{OPT} = \frac{{M}^{2}}{{σ}^{2}} = \frac{16}{{σ}^{2}}$

Assuming a single user is sending the random access preamble (i.e., *Nᵤ*=1) and that E[|*x*(*n*)|2]=1, the SNR for the aggregated random access signal is given by
$SNR = \frac{{\left|{\sum }_{t = 1}^{16} {α}_{t} {v}_{t}^{T} {h}_{1}\right|}^{2}}{16 {σ}^{2}} .$

Assume without loss of generality that the mobile has maximum transmit power of 1. Hence to get the highest SNR αₜ needs to have unit power, αₜ=exp(j*β*ₜ*), and the number of dominant basis function beams, *M_{B},* needs to be equal to *M*² (16 in this case) so that there are no zero-valued phase values. With highly-directional beams this criteria will not be met since there will only be a few (e.g., 2-3) dominant beams, and hence a significant SNR loss will occur. With near-omni-directional basis function beams, at any given mobile location, each beam will have very similar receive power and hence most or all basis functions will be important and the power received on each beam will be roughly equal. In other words for near-omni-directional beams, ${\left|{v}_{t}^{T}{h}_{u}\right|}^{2} \approx 1$ for all *t* and hence the aggregated random access signal will approach the optimal SNR of M²/*σ*² (16/σ² in the example). These observations hold equally for the data portion.

Note additionally that the gain and phase values for the dominant *M_{B}* beams could be fed back to the base station so that the base station could determine the optimal RF beamformer to use with that mobile. This feedback could be included in the data portion of the block.

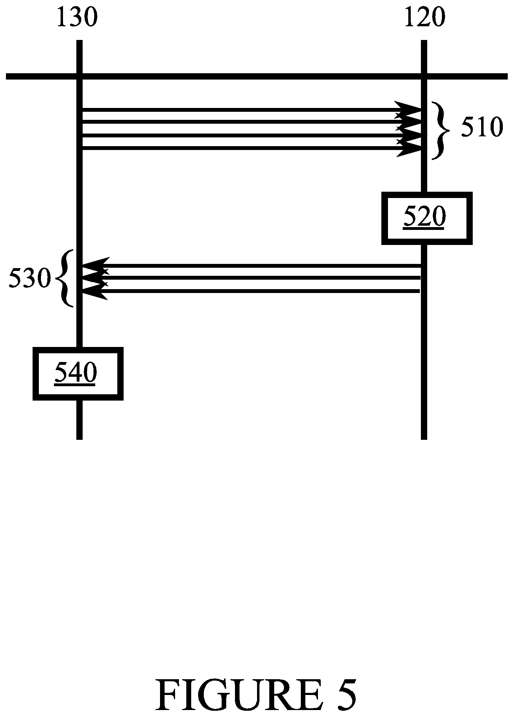

FIGURE 5 illustrates signalling in accordance with at least some embodiments of the present invention. Base station 130 and user equipment 120 are represented as the vertical elements. Time advances from the top toward the bottom.

In phase 510, base station 130 transmits pilots on its beams, which are received in user equipment 120. The beams may be near-omni-directional, for example.

In phase 520, the user equipment selects from among the beams of the base station a set of beams for the user equipment to use. This selection may be based, for example, on a criterion relating to how well the pilots are received in user equipment 120. For example, the user equipment may be configured to select into the set the beams that are received at an amplitude that exceeds a threshold. The number of beams in the set may equal the number of beams transmitted from base station 130, or it may be less than the number of beams transmitted from base station 130.

Further, in phase 520 user equipment 120 may determine, for each beam in the set, a phase value. The phase value may be determined based on the received pilots, for example. Further, in phase 520, user equipment 120 may select a random access preamble and, using a mapping, select a cover sequence based on the selected random access preamble. Further, in phase 520 user equipment 120 may form a block that comprises the selected random access preamble and some data, for example control data.

User equipment, in phase 530, transmits the block to base station 130. In detail, the block is transmitted separately to each beam in the set. In other words, user equipment 120 transmits the block in a number of repetitions that equals the number of beams in the set, as the block is separately transmitted to each beam in the set.

For each repetition of the block transmission, the block is phased with the phase determined for the beam into which this repetition of the block is transmitted. In other words, the block is rotated with the phase specific for this beam. Further, the data part of the block is multiplied with an element from the determined cover sequence, that element corresponding to this beam. Overall, therefore, each repetition of the block is phased with a different phase, and further, the data portion of each repetition of the block is multiplied with a different element from the cover sequence. Transmissions to each beam are performed at times, when base station 130 is listening on that particular beam. Based on, for example, training data or pilots sent from base station 130, user equipment 120 will know when the base station listens on each of the beams in the set of beams determined in the user equipment. For example the time that the transmission to one particular beam is performed may be a fixed time known by both the user equipment 120 and the base station 130 after training data or pilots are sent from the base station 130 using that same beam.

At phase 540, base station 130 processes the received information. This may comprise summing up received beams and detecting the random access preamble from the thus aggregated signal. With the random access preamble, base station 130 identifies the cover sequence used by user equipment 120, and then sums up the received data portions using the cover sequence, to recover the data.

As a variant of the process described above, user equipment may receive in phase 510 pilots over beams of the base station using a first basis, and transmit the block in phase 530 using a second basis. To enable this, the determined phase values may be translated by user equipment to the second basis prior to their use in phasing the blocks. The first and second bases may comprise, for example, orthogonal polarizations. Also, for example, the first basis may be a directional basis and the second basis may be a near-omni-directional basis.

The description of FIGURE 5, above, assumes that the pilots were sent from the same basis function beams which are used to listen to the random access preambles. The implication is that if near-omni-directional basis function beams are used for listening to the random access preambles, then near-omni-directional basis function beams are used to send the pilots. The use of near-omni-directional beams on the pilots means that any potential gain of beamforming obtained with directional beams is lost when going to near-omni-directional beams. The beamforming loss could be made up for by using longer pilot sequences, however longer pilot sequences makes the training less efficient since more time is required to send the pilots. So it would be beneficial to obtain the beamforming gain of highly-directional basis function beams while using near-omni-directional basis function beams when listening to the random access preamble. It turns out that this process is possible if the mobile can transform the information received from pilots sent using the highly-directional beams into information for the near-omni-directional beams. Consequently, in the variant of the process described in connection with FIGURE 5, the beams of the first basis may be more directional than beams of the second basis.

To translate the phases and/or gain found on one set of basis function beams to a different set of basis function beams, the mobile may use the basis function beams used in each set. This limitation is in contrast to the previously described method which does not require the mobile to know the basis function beams. In the method of FIGURE 5, the mobile just needs to know 1) the number of basis function beams, 2) when the pilots are sent on each basis function beam and 3) what time the mobile should send the random access preamble to be received on a given basis function beam. To translate the gain and phase values between basis function sets, first the mobile will determine a gain and phase value for the *M_{B}* dominant basis function beams for the first set by receiving pilot sequences. Note that for the translation of gain and phase values, that both a gain and phase needs to be determined, not just a phase. Then the mobile will determine the optimal beamforming vector as
${w}_{opt} = {\sum }_{b = 1}^{{M}^{2}} {γ}_{b} {v}_{b}^{1}$ 1
where ${v}_{b}^{1}$ is basis function beam b from set 1 and γ*_{b}* is the gain and phase determined for basis function beam b from set 1. Note that for the highly directional beams that many of the γ*_{b}* values could be zero. Then the gain and phase values for basis function beam b from set 2 can be determined as
${α}_{b} = {\left({v}_{b}^{2}\right)}^{H} {w}_{opt}$
where ${v}_{b}^{2}$ is basis function beam b from set 2. To get the phase only values used for the random access transmission, the phase of α*_{b}* can be used.

Further, the random access preamble could be sent with the same cover sequence as the data. In this case the base station would have to try every combination of cover sequence to detect the random access preamble, but the data and preamble could be despread simultaneously across the cover sequence. The number of cover sequences could be minimized, for example to 16 or 32, to keep base station complexity low.

Further, if the user equipment has two transmit arrays, for example each with an orthogonal polarization, then it could beamform the random access preamble and random access control data across the two arrays.

Further, the total number of basis function beams, B, can be less than the number of antennas if some scanning angles of the basis function beams are out of the sector coverage, for example greater than some angle in azimuth or elevation.

Further, the random access period could be broken up into two intervals for helping with the case of having two arrays at the base station per sector where each array has a different polarization. The user equipment would determine, for example from a downlink pilot transmission, the same best basis function beams and phase values for *M_{B}* basis function beams for both polarizations plus a co-phasing value across the two arrays, chosen to enable coherent combining across the two arrays. The co-phasing is used to determine if it is better to add a signal received on each of the arrays or if it is better to subtract the signals received on the two arrays. If adding is better, then the user equipment may be configured to transmit its random access preamble and data using the phase values for the *M_{B}* basis function beams during the first time interval where the base station will listen on the same basis function beams on both arrays and then sum the signal across the two arrays. If subtracting is better, then the user equipment would transmit its random access preamble and data using the phase values for the *M_{B}* basis function beams during the second time interval where the base station will listen on the same basis function beams on both arrays and then subtract the signal across the two arrays. In this case the base would have to run the preamble detection twice, first on the signal added across beams in the first time interval and added across the two arrays, and the second on the signal added across beams and subtracted across arrays in the second time interval.

In simulation campaigns, it has been established that the invented method, employing near-omni-directional beams, produces clear gain compared to directional or omni-directional beams without using the invented method.

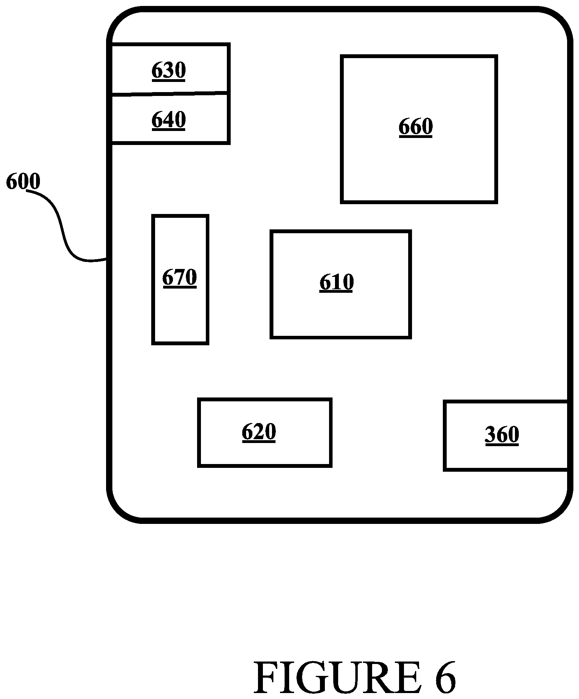

FIGURE 6 illustrates an example apparatus capable of supporting at least some embodiments of the present invention. Illustrated is device 600, which may comprise, for example, a mobile communication device such as user equipment 110 or, in applicable parts, base station 130, of FIGURE 1. Comprised in device 600 is processor 610, which may comprise, for example, a single- or multi-core processor wherein a single-core processor comprises one processing core and a multi-core processor comprises more than one processing core. Processor 610 may comprise more than one processor. A processing core may comprise, for example, a Cortex-A8 processing core manufactured by ARM Holdings or a Steamroller processing core produced by Advanced Micro Devices Corporation. Processor 610 may comprise at least one Qualcomm Snapdragon and/or Intel Atom processor. Processor 610 may comprise at least one application-specific integrated circuit, ASIC. Processor 610 may comprise at least one field-programmable gate array, FPGA. Processor 610 may be means for performing method steps in device 600. Processor 610 may be configured, at least in part by computer instructions, to perform actions.

Device 600 may comprise memory 620. Memory 620 may comprise random-access memory and/or permanent memory. Memory 620 may comprise at least one RAM chip. Memory 620 may comprise solid-state, magnetic, optical and/or holographic memory, for example. Memory 620 may be at least in part accessible to processor 610. Memory 620 may be at least in part comprised in processor 610. Memory 620 may be means for storing information. Memory 620 may comprise computer instructions that processor 610 is configured to execute. When computer instructions configured to cause processor 610 to perform certain actions are stored in memory 620, and device 600 overall is configured to run under the direction of processor 610 using computer instructions from memory 620, processor 610 and/or its at least one processing core may be considered to be configured to perform said certain actions. Memory 620 may be at least in part comprised in processor 610. Memory 620 may be at least in part external to device 600 but accessible to device 600.

Device 600 may comprise a transmitter 630. Device 600 may comprise a receiver 640. Transmitter 630 and receiver 640 may be configured to transmit and receive, respectively, information in accordance with at least one cellular or non-cellular standard. Transmitter 630 may comprise more than one transmitter. Receiver 640 may comprise more than one receiver. Transmitter 630 and/or receiver 640 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 600 may comprise a near-field communication, NFC, transceiver 650. NFC transceiver 650 may support at least one NFC technology, such as NFC, Bluetooth, Wibree or similar technologies.

Device 600 may comprise user interface, UI, 660. UI 660 may comprise at least one of a display, a keyboard, a touchscreen, a vibrator arranged to signal to a user by causing device 600 to vibrate, a speaker and a microphone. A user may be able to operate device 600 via UI 660, for example to accept incoming telephone calls, to originate telephone calls or video calls, to browse the Internet, to manage digital files stored in memory 620 or on a cloud accessible via transmitter 630 and receiver 640, or via NFC transceiver 650, and/or to play games.

Device 600 may comprise or be arranged to accept a user identity module 670. User identity module 670 may comprise, for example, a subscriber identity module, SIM, card installable in device 600. A user identity module 670 may comprise information identifying a subscription of a user of device 600. A user identity module 670 may comprise cryptographic information usable to verify the identity of a user of device 600 and/or to facilitate encryption of communicated information and billing of the user of device 600 for communication effected via device 600.

Processor 610 may be furnished with a transmitter arranged to output information from processor 610, via electrical leads internal to device 600, to other devices comprised in device 600. Such a transmitter may comprise a serial bus transmitter arranged to, for example, output information via at least one electrical lead to memory 620 for storage therein. Alternatively to a serial bus, the transmitter may comprise a parallel bus transmitter. Likewise processor 610 may comprise a receiver arranged to receive information in processor 610, via electrical leads internal to device 600, from other devices comprised in device 600. Such a receiver may comprise a serial bus receiver arranged to, for example, receive information via at least one electrical lead from receiver 640 for processing in processor 610. Alternatively to a serial bus, the receiver may comprise a parallel bus receiver.

Device 600 may comprise further devices not illustrated in FIGURE 6. For example, where device 600 comprises a smartphone, it may comprise at least one digital camera. Some devices 600 may comprise a back-facing camera and a front-facing camera, wherein the back-facing camera may be intended for digital photography and the front-facing camera for video telephony. Device 600 may comprise a fingerprint sensor arranged to authenticate, at least in part, a user of device 600. In some embodiments, device 600 lacks at least one device described above. For example, some devices 600 may lack a NFC transceiver 650 and/or user identity module 670.

Processor 610, memory 620, transmitter 630, receiver 640, NFC transceiver 650, UI 660 and/or user identity module 670 may be interconnected by electrical leads internal to device 600 in a multitude of different ways. For example, each of the aforementioned devices may be separately connected to a master bus internal to device 600, to allow for the devices to exchange information. However, as the skilled person will appreciate, this is only one example and depending on the embodiment various ways of interconnecting at least two of the aforementioned devices may be selected without departing from the scope of the present invention..

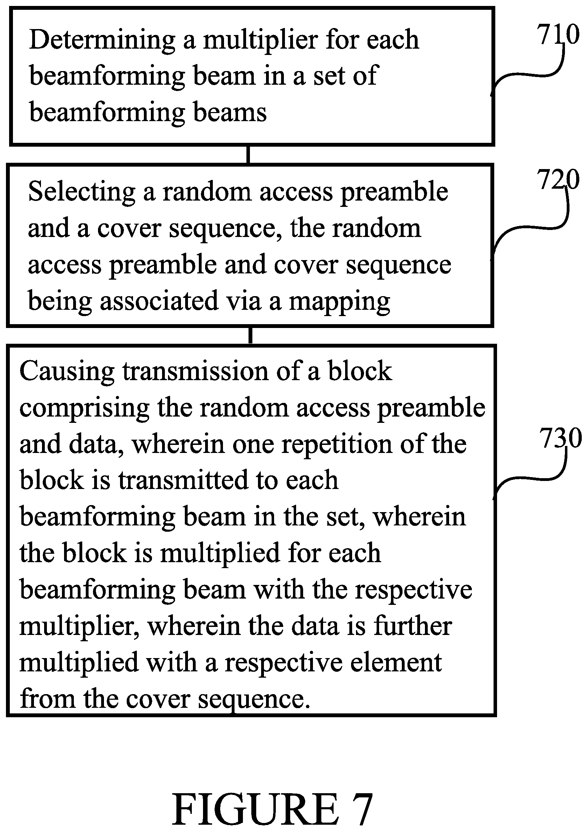

FIGURE 7 is a flow graph of a method in accordance with at least some embodiments of the present invention. The phases of the illustrated method may be performed in user equipment 110, or in a control device configured to control the functioning thereof, when installed therein.

Phase 710 comprises determining a multiplier for each beamforming beam in a set of beamforming beams. Phase 720 comprises selecting a random access preamble and a cover sequence, the random access preamble and the cover sequence being associated via a mapping. Finally, phase 730 comprises causing transmission of a block comprising the random access preamble and data, wherein one repetition of the block is transmitted to each beamforming beam in the set, wherein the block is multiplied for each beamforming beam with the respective multiplier, wherein the data is further multiplied with a respective element from the cover sequence. The transmission of the block may comprise a transmission of a modulated electromagnetic signal, wherein the multiplication with the multiplier comprises causing a modification in a physical characteristic of the electromagnetic signal. Examples of such physical characteristics include phase rotation and amplitude adjustment.

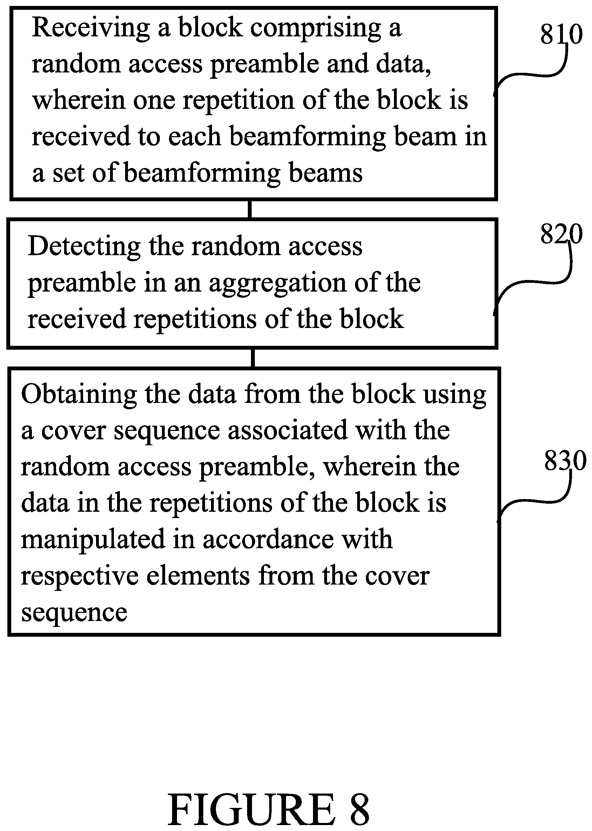

FIGURE 8 is a flow graph of a method in accordance with at least some embodiments of the present invention. The phases of the illustrated method may be performed in base station 130, or in a control device configured to control the functioning thereof, when installed therein.

Phase 810 comprises receiving a block comprising a random access preamble and data, wherein one repetition of the block is received to each beamforming beam in a set of beamforming beams. Phase 820 comprises detecting the random access preamble in an aggregation of the received repetitions of the block. Finally, phase 830 comprises obtaining the data from the block using a cover sequence associated with the random access preamble, wherein data in the repetitions of the block is manipulated in accordance with respective elements from the cover sequence. Manipulating in accordance with respective elements from the cover sequence may comprise multiplying or dividing a repetition of the data with an element from the cover sequence that corresponds to the beam over which this repetition of the data was received.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in improving the performance of wireless communication.

### ACRONYMS LIST

- 3GPP: 3^{rd} generation partnership project
- 5G: fifth generation
- AP: access point
- DFT: discrete Fourier transform
- EHF: extremely high frequency
- LTE: long term evolution
- mmWave: millimeter wave
- NR: new radio
- RF: radio frequency
- SNR: signal-to-noise ratio
- WCDMA: wideband code division multiple access
- WiMAX: worldwide interoperability for microwave access
- WLAN: wireless local area network

### REFERENCE SIGNS LIST

| | |
|---|---|
| 110, 120 | user equipment |
| 130 | base station |
| 140 | core network node |
| 150 | gateway |
| 112, 123 | wireless link |
| 134, 145 | connection |
| 510 - 540 | phases of the method of FIGURE 5 |
| 600 - 660 | structure of the device of FIGURE 6 |
| 710 - 730 | phases of the method of FIGURE 7 |
| 810 - 830 | phases of the method of FIGURE 8 |

## Claims

1. A method comprising:
- determining (710) a multiplier comprising a phase with amplitude unity for each beam forming beam in a set of beam forming beams;
- selecting (720) a random access preamble and a cover sequence, the random access preamble and the cover sequence being associated via a one-to-one mapping, and
causing (730) transmission of a block comprising the random access preamble and data, wherein the block is separately transmitted to each beamforming beam in the set,
wherein the block is multiplied for each beamforming beam with the respective multiplier prior to the transmission,
wherein the data is further multiplied with a respective element from the cover sequence based on the mapping prior to the transmission,
wherein for each separate transmission of the block, the data is multiplied with a different element from the cover sequence.

2. The method according to claim 1, wherein the beamforming beams are near-omni-directional and/ or wherein the beam forming beams are basis function beams.

3. The method according to claim 2, wherein the near-omni-directional beamforming beam varies in amplitude by less than 12 dB over a span of 160 degrees.

4. The method according to any of claims 1 -3, wherein each multiplier comprises a phase with amplitude unity.

5. The method according to any of claims 1 - 4, further comprising multiplying the random access preamble with the respective element from the cover sequence and/ or transmitting the block using a millimetre wave band.

6. The method according to any of claims 1 - 5, wherein the data comprises at
least one of the following: an identifier of the apparatus, and identifier of a subscription associated with the apparatus and feedback information to assist in beam forming communication toward the apparatus.

7. An apparatus (110) comprising:
- means (610) arranged for determining a multiplier comprising a phase with amplitude unity for each beam forming beam in a set of beam forming beams;
- means (610) arranged for selecting a random access preamble and a
cover sequence, the random access preamble and the cover sequence being associated via a one-to-one mapping, and
- means (610) arranged for causing transmission of a block comprising the random access preamble and data, wherein the block is separately transmitted to each beamforming beam in the set, wherein the block is
multiplied for each beam forming beam with the respective multiplier prior to the transmission, wherein the data is further multiplied with a respective element from the cover sequence based on the mapping prior to the transmission, wherein for each separate transmission of the block the data is multiplied with a different element from the cover sequence.

## Patentansprüche

1. Verfahren, umfassend:
- Bestimmen (710) eines Multiplikators, der eine Phase mit Einheitsamplitude umfasst, für jeden Strahlformungsstrahl in einem Satz von Strahlformungsstrahlen;
- Auswählen (720) einer Direktzugriffspräambel und einer Decksequenz, wobei die Direktzugriffspräambel und die Decksequenz über eine Eins-zu-eins-Zuordnung zugeordnet sind, und
Veranlassen (730) einer Übertragung eines Blocks, der die Direktzugriffspräambel und Daten umfasst, wobei der Block separat an jeden Strahlformungsstrahl in dem Satz übertragen wird,
wobei der Block für jeden Strahlformungsstrahl mit dem jeweiligen Multiplikator vor der Übertragung multipliziert wird,
wobei die Daten ferner mit einem jeweiligen Element der Decksequenz auf der Grundlage der Zuordnung vor der Übertragung multipliziert werden,
wobei für jede separate Übertragung des Blocks die Daten mit einem anderen Element der Decksequenz multipliziert werden.

2. Verfahren nach Anspruch 1, wobei die Strahlformungsstrahlen nahezu omnidirektional sind und/oder wobei die Strahlformungsstrahlen Basisfunktionsstrahlen sind.

3. Verfahren nach Anspruch 2, wobei der nahezu omnidirektionale Strahlformungsstrahl in der Amplitude um weniger als 12 dB über eine Spanne von 160 Grad variiert.

4. Verfahren nach einem der Ansprüche 1 bis 3, wobei jeder Multiplikator eine Phase mit Einheitsamplitude umfasst.

5. Verfahren nach einem der Ansprüche 1 bis 4, ferner umfassend das Multiplizieren der Direktzugriffspräambel mit dem jeweiligen Element der Decksequenz und/oder das Übertragen des Blocks unter Verwendung eines Millimeterwellenbands.

6. Verfahren nach einem der Ansprüche 1 bis 5, wobei die Daten mindestens eines der Folgenden umfassen: einen Identifikator der Vorrichtung, und einen Identifikator eines Abonnements, das der Vorrichtung zugeordnet ist, und Rückkopplungsinformationen zur Unterstützung der Strahlformungskommunikation zu der Vorrichtung hin.

7. Vorrichtung (110), umfassend:
- Mittel (610), die angeordnet sind zum Bestimmen eines Multiplikators, der eine Phase mit Einheitsamplitude umfasst, für jeden Strahlformungsstrahl in einem Satz von Strahlformungsstrahlen;
- Mittel (610), die angeordnet sind zum Auswählen einer Direktzugriffspräambel und einer Decksequenz, wobei die Direktzugriffspräambel und die Decksequenz über eine Eins-zu-eins-Zuordnung zugeordnet sind, und
- Mittel (610), die angeordnet sind zum Veranlassen einer Übertragung eines Blocks, der die Direktzugriffspräambel und Daten umfasst, wobei der Block separat an jeden Strahlformungsstrahl in dem Satz übertragen wird, wobei der Block für jeden Strahlformungsstrahl mit dem jeweiligen Multiplikator vor der Übertragung multipliziert wird, wobei die Daten ferner mit einem jeweiligen Element der Decksequenz auf der Grundlage der Zuordnung vor der Übertragung multipliziert werden, wobei für jede separate Übertragung des Blocks die Daten mit einem anderen Element der Decksequenz multipliziert werden.

## Revendications

1. Procédé comprenant :
- déterminer (710) un multiplicateur comprenant une phase avec une amplitude unitaire pour chaque faisceau de formation de faisceau dans un ensemble de faisceaux de formation de faisceau ;
- sélectionner (720) un préambule d'accès aléatoire et une séquence de couverture, le préambule d'accès aléatoire et la séquence de couverture étant associés via un mappage biunivoque, et
provoquer (730) la transmission d'un bloc comprenant le préambule d'accès aléatoire et des données, dans lequel le bloc est transmis séparément à chaque faisceau de formation de faisceau dans l'ensemble,
dans lequel le bloc est multiplié pour chaque faisceau de formation de faisceau par le multiplicateur respectif avant la transmission,
dans lequel les données sont en outre multipliées par un élément respectif de la séquence de couverture sur la base du mappage avant la transmission,
dans lequel, pour chaque transmission séparée du bloc, les données sont multipliées par un élément différent de la séquence de couverture.

2. Procédé selon la revendication 1, dans lequel les faisceaux de formation de faisceau sont quasi-omnidirectionnels et/ou dans lequel les faisceaux de formation de faisceau sont des faisceaux de fonction de base.

3. Procédé selon la revendication 2, dans lequel le faisceau de formation de faisceau quasi-omnidirectionnel varie en amplitude de moins de 12 dB sur une plage de 160 degrés.

4. Procédé selon l'une quelconque des revendications 1 à 3, dans lequel chaque multiplicateur comprend une phase avec une amplitude unitaire.

5. Procédé selon l'une quelconque des revendications 1 à 4, comprenant en outre la multiplication du préambule d'accès aléatoire par l'élément respectif de la séquence de couverture et/ou la transmission du bloc en utilisant une bande d'ondes millimétriques.

6. Procédé selon l'une quelconque des revendications 1 à 5, dans lequel les données comprennent au moins l'un des éléments suivants : un identifiant de l'appareil, et un identifiant d'un abonnement associé à l'appareil et des informations de rétroaction pour aider à la communication de formation de faisceau vers l'appareil.

7. Appareil (110) comprenant :
- des moyens (610) agencés pour déterminer un multiplicateur comprenant une phase avec une amplitude unitaire pour chaque faisceau de formation de faisceau dans un ensemble de faisceaux de formation de faisceau ;
- des moyens (610) agencés pour sélectionner un préambule d'accès aléatoire et une séquence de couverture, le préambule d'accès aléatoire et la séquence de couverture étant associés via un mappage biunivoque, et
- des moyens (610) agencés pour provoquer la transmission d'un bloc comprenant le préambule d'accès aléatoire et des données, dans lequel le bloc est transmis séparément à chaque faisceau de formation de faisceau dans l'ensemble, dans lequel le bloc est multiplié pour chaque faisceau de formation de faisceau par le multiplicateur respectif avant la transmission, dans lequel les données sont en outre multipliées par un élément respectif de la séquence de couverture sur la base du mappage avant la transmission, dans lequel, pour chaque transmission séparée du bloc, les données sont multipliées par un élément différent de la séquence de couverture.
